# EUROPEAN PATENT APPLICATION

(11) **EP 2 279 878 A1**
(43) Date of publication of application: **02.02.2011**
(21) Application number: 09425267.3
(22) Date of filing: 07.07.2009
(51) Int. Cl.: B42D 15/00, G06K 19/06, G07D 7/12, G06K 7/00

(54) **Method of manufacturing an identification device, device obtained and reader for this device**

(71) Applicant: Z2M S.r.L., 38100 Trento (IT)
(72) Inventor: Maglione, Alfredo, 38100 Trento (IT); Zoccarato, Paolo, 35100 Padova (IT); Moreschi, Enrico, 35136 Padova (IT); Guarnieri, Vittorio, 38100 Trento (IT)
(74) Representative: Borsano, Corrado

(57) **Abstract**

A method of manufacturing an identification device and the device obtained, wherein the identification device is obtained through micromachining techniques and comprises at least one substrate made of quartz, silicon or another suitable material, a surface metallization micromachined so as to contain a message and a protective layer made of glass or polymer, which can be at least partly opacified to hide a portion of said message from reading in the visible spectrum.

## Description

### Field of the invention

The present invention relates to a method of manufacturing an identification device and to the device obtained, in particular as a valid aid in opposing counterfeiting.

### State of the art

Various systems for marking products are known for the purpose of guaranteeing the origin and authenticity thereof.

One technology used for systems for preventing counterfeiting is the hologram. Holograms are marks capable of varying their image, shape or color according to the ambient light. This type of protective technology of a product cannot be reproduced by means of a color photocopier or high definition scanner. This is due to the fact that the light required by the instrument used for any attempt to counterfeit would make the image depicted on the hologram invisible or only partly visible. Holograms are widely used as protective systems for brands and are used both in the private and public sectors. They are often used to prove the authenticity of a product, but can also be found on banknotes, credit cards and identity documents. Therefore, the authenticity of the identification device guarantees the authenticity of the product to which the identification device is applied.

The manufacturing of an original hologram is costly and requires a considerable amount of time to produce, while replicas thereof with mass production from the original are relatively inexpensive, although machinery and production skills are required. In any case, mechanical copies of holograms are relatively easy to produce due to the fact that they are often printed in relief. A person skilled in the art could easily optically replicate the hologram, making it very difficult to distinguish this counterfeit from the original copy. Once a good "master" copy has been obtained, mass production is very simple.

Another technique involves the use of nanobarcodes, i.e. polymers which are shaped with lithographic techniques with nanoimprinting in a manner suitable to form three-dimensional barcodes on a substrate. A high resolution CCD camera measures the reflection from the surface using a laser in the IR region.

This technique is difficult to replicate, but is also particularly costly.

Another technique involves the use of nanostructured barcodes of particles with submicrometer dimensions of metallic composition. These barcodes make use of the different reflectance of different metals subsequently analyzed under an optical microscope and with dedicated software. The devices contain thousands of metallic bars in a combination that generates a trillion unique codes.

Another technique, known in English as Surface enhanced Raman scattering tags, involves, as unique identification means, recognition of a single spectrum generated by substances illuminated with scattered light. An identification device of this kind comprises nanostructured metallic particles, a reader and a coating material such as silica.

Other techniques involve the use of "Quantum Dots, QD", which depending on their composition and dimension can produce a characteristic emission which causes fluorescence. In this specific application they are used as barcodes, as in fact the emission intensity at a certain wavelength can be varied to produce binary codes.

Other techniques use organic fibers of nanometer dimensions which have different optical properties (fluorescence) according to the UV illumination.

A dense series of nanostructured materials are used in the field of the security; some materials have proved the capability of blocking UV radiations, thus depositing these materials so as to obtain an ink that is only fluorescent to ultraviolet light.

CNTs (carbon nanotubes) are also used to mark products. In particular, these materials with fiber diameters of a few nanometers can be lithographed producing electrical resistances defined and measurable through a reader which identified objects with identical conductivity. Using a confocal laser microscope it has been found that it is possible to measure thicknesses of deposited films.

In general, although difficult to reproduce, almost all of the technologies intended to limit or prevent counterfeiting indicated above are particularly complex and costly to produce, making their use limited to those products whose value is considerably higher than a mark or an identification device certifying that the product is original.

### Summary of the invention

The object of the present invention is to provide an identification device suitable to solve the aforesaid problem.

The present invention relates to an identification device which, according to claim 1, comprises a substrate coated with at least one dielectric film on which at least one metallic layer is deposited, micromachined so as to represent a message, placing on top of said micromachined metallic layer an insulating protective layer transparent at least in one portion with respect to a first wavelength.

An identification device thus described can be incorporated in a product to become the certificate of uniqueness and traceability thereof.

Advantageously, at least a portion of said metal layer can conveniently be hidden from view, so that it can be read only through a suitable viewing system operating at a second different wavelength from said first visible wavelength, such as infrared or ultraviolet.

The present invention also relates to a method for manufacturing an identification device, according to claim 11.

According to another aspect of the present invention, the present invention also relates to a method of coding/decoding a message incorporated in said identification device, according to with claim 16.

Advantageously, the method of the present invention is particularly suitable and practical to produce relatively inexpensive identification devices useful to mark products so as to prevent counterfeiting thereof. The complexity of production of these devices makes it extremely difficult or even impossible for the ill-intentioned to replicate the device. The limited dimensions of the identification device make it versatile for any kind of application and assembly; moreover, the method of coding and decoding a message provides that at least one portion of the message can be used directly by the consumer, who can thus directly appraise the authenticity of the identification device and consequently of the product marked, while at least one further portion of the message can be used through specific reading means offering a further and more reliable level of security in the appraisal of said authenticity. Said decoding system of said further portion of message provides for the use of a light source according to a predetermined wavelength and a video camera suitable to detect the relative radiation reflected from the identification device.

The possibility of reading by means of video cameras makes the method of decoding the message or identification code contained in the identification device similar to reading of a barcode, although with considerable differences.

The sectors most interested in the system of the present invention can belong, for example, to the field of clothing, textiles, footwear and leather goods, as well as perfumes, beauty treatments, jewelry and eyewear, household cleaning products, food products alcoholic beverages, cosmetics, electronic products and all those industrial and handicraft products that require to be protected against counterfeiting.

The dependent claims describe preferred embodiments of the invention, forming an integral part of the present description.

### Brief description of the figures

Further features and advantages of the invention will be more apparent in the light of the detailed description of preferred, but not exclusive, embodiments of an identification device, shown by way of non-limiting example with the aid of the accompanying drawings, wherein:

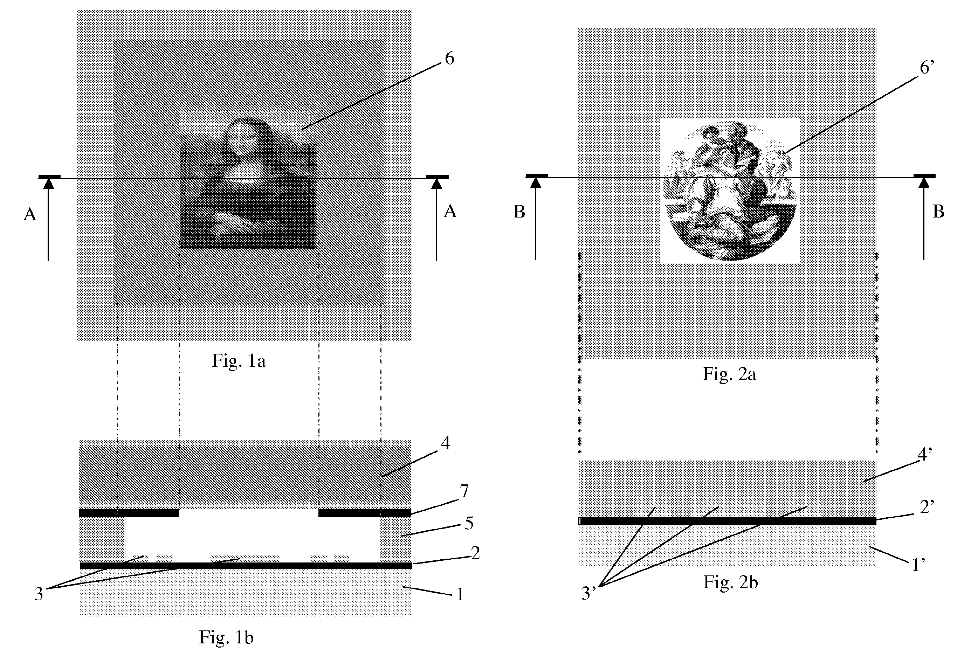

Figs. 1a and 1b respectively represent a front view and a sectional view of a first embodiment of identification device in conformity with the present invention;
Figs. 2a and 2b respectively represent a front view and a sectional view of a second embodiment of said identification device;
Figure. 3 schematically represents a sectional view of application of the embodiment of Fig. 2 to a product.

The symbols, logos and pictorial works shown in the figures are intended purely by way of example of a message represented by the device in question.

The same reference numbers and letters in the figures identify the same element or components.

### Detailed description of a preferred embodiment of the invention

An embodiment of the manufacturing method according to the present invention comprises the use of a substrate 1 or 1' or 1", for example silicon or quartz and the like, on a face of which the following is implemented:
- deposition of at least one dielectric film 2 or 2' or 2" of silicon oxides and/or silicon nitrides and/or titanium oxides, and/or polysilicon oxides; moreover this film can have a thickness ranging from a few nanometers up to tens of microns and can completely or partly coat said substrate; moreover, said dielectric film can be produced by vapor deposition, or by growth through oxidation techniques using oxygen or water vapor, or through techniques based on plasmas such as the technique known in English as PECVD ("Plasma-enhanced chemical vapor deposition"),
- metallization of said dielectric film 2, so as to coat it with a metal layer 3 or 3' or 3" applied, for example, with evaporation or sputtering techniques, the metallization layer can be produced with the metals generally used in the field of microelectronics, such as aluminum, but also precious metals that can give added value to the product, such as gold, platinum, etc.,
- a UV lithography process on the metallization layer to determine structures of micrometer dimensions inside which a message can be integrated, such as a logo, an inscription, a code, biometric codes, alphanumeric codes or barcodes, etc., and combinations thereof,
- application of a protective layer 4 or 4' or 4" at least partly transparent with respect to a predetermined wavelength which can be a layer of glass 4 or a polymer 4' or 4" and preferably photosensitive.

In the case of application of a layer of glass 4, application is simplified by making sure that at least a portion of metallization around the perimeter is eliminated to allow resins 5 to be used, preferably producing a peripheral bead of resin 5, which can have a safe grip on the substrate or on the dielectric film. Moreover, the glass can be treated with an anti-glare treatment.

Special glass can be used, attached to the identification device using, for example, wafer bonding techniques, so as to obtain hermetic assembly without altering the features of the identification device. This technology has the advantage of offering a noteworthy final result in relation to the low cost of the process used.

The thicknesses of the various layers forming a combination such as to define an identification code. Besides providing a particular and unique coloring, the deposition of various layers can be used as part of an identification code or message incorporated in the identification device. In fact, the color is determined by the thickness of the material deposited or by the sum of the thicknesses thereof. Through optical measurements of interferometry it is possible to determine this thickness which is unequivocally determined by manufacture of the device. Using masks in light and shadow, UV radiation photolithography allows the production of geometries of a few microns which can then be transferred to the substrates used. For this purpose, CAD applications are used to draw masks with micrometer geometries which are then used to treat a layer of photosensitive polymer. This mechanism has the undoubted advantage of producing designs, inscriptions and more in general a portion of message with micrometer resolution at a low cost.

Adaptation of microelectronic technologies to this type of application provides, besides the aforesaid advantage of low production costs, undoubted advantages both in the precision of producing brands and logos which can be reproduced in a manner that is a true copy of the original brand with micrometer dimensions and therefore which are difficult to reproduce without the use of similar technologies. Further progress with respect to prior art is found in the possibility of integrating, both in a brand and in an inscription, codes of any natural, readable at least through enlargement by means of specific video cameras.

Said inscription or brand or symbol in general 6 or 6' can therefore be of any nature and integrate, if necessary, a further code or symbol, etc..

An inscription or logo can, for example, be recognized with the naked eye, or by means of a simple magnifying glass, while the code inserted in a letter or in the logo, can be read and if necessary decoded by means of specific reading systems comprising video cameras connected to a computer.

Portions of the metallization layer can be eliminated to etch said message in the layer according to various UV lithography techniques.

For example, the metalized layer can be coated with a photosensitive polymer, called positive or negative photoresist and, after applying an appropriate mask, irradiated with UV rays. The product obtained is then immersed in an appropriate solution, generally at least weakly basic, to etch the parts made of soluble polymer in this solution. Therefore, the portions of metal film not protected by the photoresist are removed by heating the product or by chemical etching immersing it in a specific chemical bath.

When the metallization layer is particularly difficult to remove chemically, as in the case of Platinum, the lithography process includes a micromachining process according to which a photopolymer film is deposited directly on said dielectric layer, the photopolymer is activated by means of irradiation and then the substrate is metalized to coat said photopolymer. The semi-processed product is then immersed in a chemical solution which dissolves the parts of photopolymer sensitive to said chemical solution detaching the relative portions of metallization layer placed on top.

The identification device manufactured with the technologies described can be produced on various types of substrates, such as quartz, but in general on any substrate which can be processed with micromachining technologies.

Deposition of at least a further photopolymer film 7 having the function of filter with respect to a specific wavelength can be deposited on said protective layer, for example allowing said protective layer to be opacified so as to at least prevent viewing of the underlying layers in the spectrum of visible light, but which is transparent for other wavelengths, for example in the infrared or UV spectrum. In particular, it is preferred that said filtering photopolymer film 7 is positioned on the inner face of the protective layer 4 when it is glass, while no other measure requires to be taken when the protective layer 4' is already a photopolymer. Advantageously, the use of this technology prevents counterfeiters from reading the part hidden by the opacified portions of the protective layer 4 or 4', unless they are equipped with an appropriate reading system in conformity with the present invention. However, replication of a similar identification device is in any case difficult to produce, while very economical if produced at industrial level.

Said protective layer can itself be a polymer having the function of a filter so as to produce the features described above, having the dual function of protection and filter.

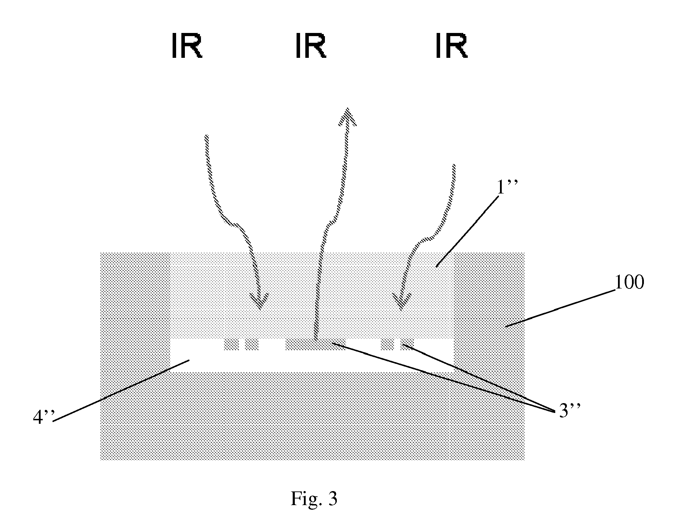

According to another aspect of the invention the metalizations can be buried in the layers of silicon or produced on the back of the identification device, as shown in Figure 3, the substrate 1' being transparent for wavelengths greater than 1.2 microns.

Therefore, the device can be attached to or partly incorporated in a product 100 having the metallization layer facing the product, as shown in Fig. 3, or it can be fully incorporated in the product, being in any case readable from the outside by means of appropriate radiation sources and appropriate sensors suitable to detect the relative reflected radiation.

According to another aspect of the invention, the dielectric film or films can be selected in relation to the particular color characterizing them, so as to respect the color of a logo or brand of a manufacturer.

Integration of a detection system of a message according to the present invention at industrial level can be implemented according to techniques known to those skilled in the art.

The elements and the features illustrated in the various preferred embodiments can be combined without however departing from the scope of protection of the present application.

## Claims

1. An identification device, in particular for guaranteeing the authenticity of a product, comprising a substrate (1)(1')(1") coated with at least one dielectric film (2)(2')(2") on which at least one metallic layer (3)(3')(3") is deposited, micromachined so as to represent a message, placing on top of said micromachined metallic layer an insulating protective layer (4)(4')(4") transparent at least in one portion with respect to a first wavelength.

2. The identification device according to claim 1, wherein said dielectric film (2)(2')(2") can be a silicon oxide and/or silicon nitrides and/or titanium oxides, and/or polysilicon oxides.

3. The identification device according to claim 1 or 2, wherein said dielectric film (2)(2')(2") can have a thickness ranging from a few nanometers up to tens of microns.

4. The device according to one of the preceding claims, wherein said metallic layer (3)(3')(3") is aluminum and/or gold and/or platinum.

5. The device according to one of the preceding claims, wherein said protective layer (4)(4')(4") is a glass or a polymer.

6. The device according to claim 5, wherein a portion of said glass is coated at least partly by an opacifying film (5), so that said portion of glass is transparent at a second wavelength.

7. The device according to claim 5 or 6, wherein when said protective layer (4)(4')(4") is rigid it is attached to the substrate (1)(1')(1") or to the dielectric film (2)(2')(2") by means of a bead of resin (7).

8. A product comprising an identification device according to one of claims 1 to 7.

9. The product according to claim 8, wherein said device is attached to or partly incorporated in the product by said substrate (1) (1') (1").

10. The product according to claim 8, wherein said device is attached to or partly incorporated in the product by said protective film (4"), so as to show said substrate (1)(1')(1") on the outside.

11. A method of manufacturing an identification device, comprising the use of a substrate (1) (1')(1") on a face of which the following is implemented
- deposition of at least one dielectric film (2)(2')(2"),
- metallization of said dielectric film (2)(2')(2") by means of a metallic layer (3)(3')(3")
- a UV lithography process of the metallization layer to determine structures of micrometer dimensions representing a message,
- application of a protective layer (4) at least partly transparent with respect to a first predetermined wavelength.

12. The method according to claim 11, wherein an opacifying film (5) is applied at least partly to said protective layer (4), so that said portion is transparent with respect to a second wavelength.

13. A method of applying an identification device according to one of claims 1 to 7, to a product (100) wherein said identification device is attached to or at least partly incorporated in said product (100) by said protective layer (4") so that the identification device shows the substrate (1 ").

14. A method of coding a message represented by an identification device in conformity with claims 1 to 7, comprising micromachining of said metallic layer (3) (3') (3") to etch thereon
- a symbol and/or
- an inscription and/or
- an alphanumeric code or a barcode or the like and/or
- a symbol or an inscription in which an alphanumeric code is inserted.

15. The method according to claim 14, wherein at least a first portion of said message is readable with respect to a first wavelength and/or a second portion of said message is readable with respect to a second wavelength.

16. A method for coding/decoding information in an identification device according to claims 1 to 7, comprising the process of attributing a predetermined message to a combination of the thicknesses and colors of said at least one dielectric film (2)(2')(2") and/or said at least one metallic layer (3)(3')(3") and/or said at least one protective layer (4)(4')(4").

17. A system of decoding an identification device according to one of claims 1 to 7, comprising at least one optical reading unit operating at a first wavelength and suitable to read a first portion of said message represented by said identification device.

18. The system according to claim 17, also comprising a first light source compatible with said first wavelength.

19. The system according to claims 17 or 18, further comprising a second optical reading unit operating at a second wavelength suitable to read a second portion of said message represented by said identification device and a second light source compatible with said second wavelength.
